# EUROPEAN PATENT SPECIFICATION

(11) **EP 1 671 540 B1**
(45) Date of publication and mention of the grant of the patent: **31.01.2007**
(21) Application number: 04029686.5
(22) Date of filing: 15.12.2004
(51) Int. Cl.: A01K 89/01

(54) **Fishing spinning reel**
Angelwinde
Moulinet de pêche

(43) Date of publication of application: 21.06.2006
(73) Proprietor: Hong, Eugene, Taichung (TW)
(72) Inventor: Hong, Eugene, Taichung (TW)
(74) Representative: Kampfenkel, Klaus

(56) References cited:
- EP-A- 1 444 892
- US-A- 6 082 651

## Description

This invention relates to a fishing reel, and more particularly to a fishing spinning reel.

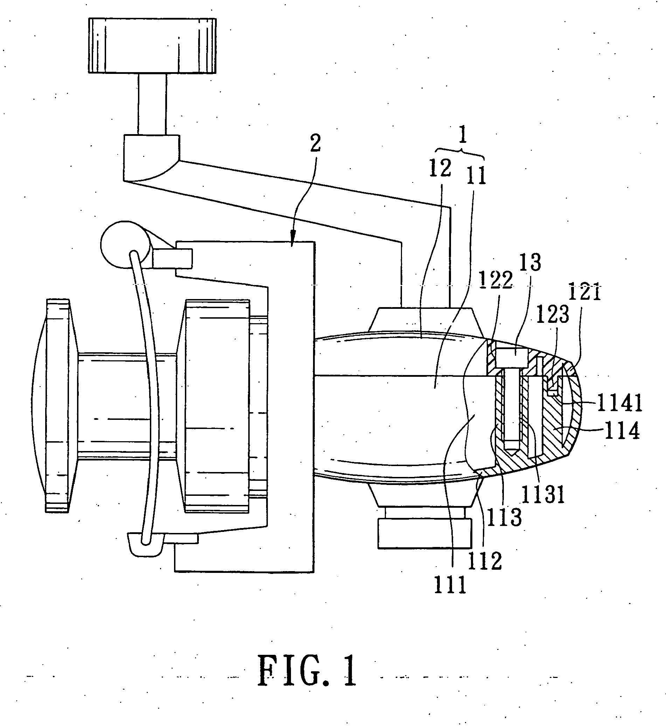

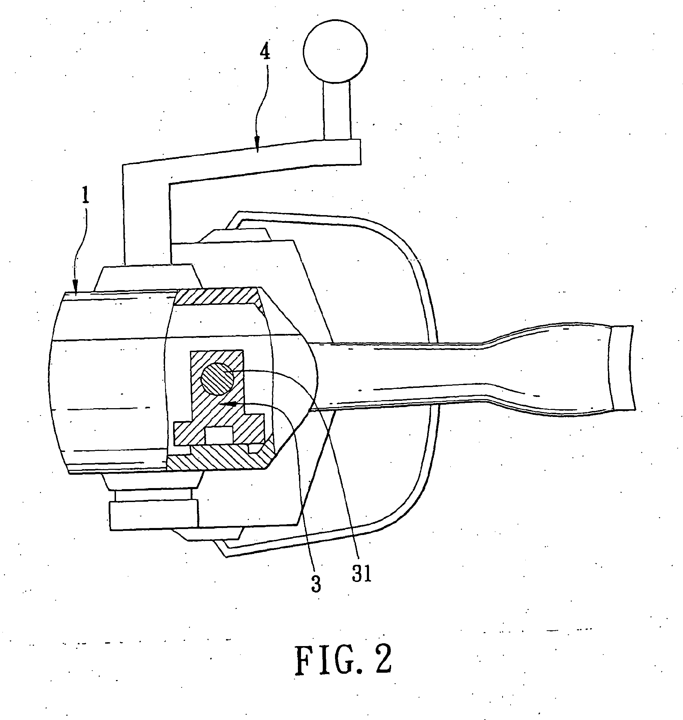

Referring to Figs. 1 and 2, a conventional fishing spinning reel is shown to include a reel body 1, a rotor 2 disposed rotatably on the reel body 1, a driving unit 3 disposed within the reel body 1, and a rotary lever unit 4 disposed pivotally on the reel body 1 and connected to the driving unit 3. The rotary lever unit 4 can be actuated to drive the driving unit 3.

The reel body 1 includes a housing 11 made of metal, and a cover 12 made of a plastic material. The housing 11 has a base wall 112 that defines a space 111 for mounting the driving unit 3, and a pair of first and second positioning rods 113, 114 extending inwardly from the base wall 112. The first positioning rod 113 is formed with a threaded hole 1131. The second positioning rod 114 is formed with a recess 1141. The cover 12 has a base wall 121, a,counterbore 122 formed through the base wall 121 and is aligned with the first positioning rod 113, and a projection 123 extending from the base wall 121 into the recess 1141 in the second positioning rod 114. A headed bolt 13 extends through the counterbore 122 in the cover 12, and engages the threaded hole 1131 in the first positioning rod 113 so as to interconnect the housing 11 and the cover 12 fixedly. Because the cover 12 is made of the plastic material, the weight of the conventional fishing spinning reel can be reduced. However, the volume ratio of the cover 12 to the reel body 11 is relative small, thereby resulting in limited reduction of the weight of the fishing spinning reel.

The object of this invention is to provide a lightweight fishing spinning reel.

According to this invention, a fishing spinning reel includes a flat reel body, two side covers, and a driving unit. The reel body is made of metal, and has a plurality of mounting holes formed through the reel body. Each of the mounting holes has two open ends at two opposite sides of the reel body. The side covers are made of a plastic material, are disposed respectively on the opposite sides of the reel body, and are interconnected to clamp the reel body therebetween so as to define an accommodating space among the reel body and the side covers. The driving unit is disposed within the accommodating space.

These and other features and advantages of this invention will become apparent in the following detailed description of a preferred embodiment of this invention, with reference to the accompanying drawings, in which:
Fig. 1 is a partly sectional side view of a conventional fishing spinning reel;
Fig. 2 is a partly sectional top view of the conventional fishing spinning reel;
Fig. 3 is a side view of the preferred embodiment of a fishing spinning reel according to this invention, two side covers being removed to illustrate the structure of a reel body;
Fig. 4 is a fragmentary side view of a driving unit and one of the side covers of the preferred embodiment;
Fig. 5 is a fragmentary sectional view of the preferred embodiment, illustrating the structure of the driving unit;
Fig. 6 is a fragmentary, partly sectional side view of the preferred embodiment, illustrating a rotary lever unit; and
Fig. 7 is a partly sectional top view of the preferred embodiment, illustrating how the side covers are interconnected fixedly by a headed bolt.

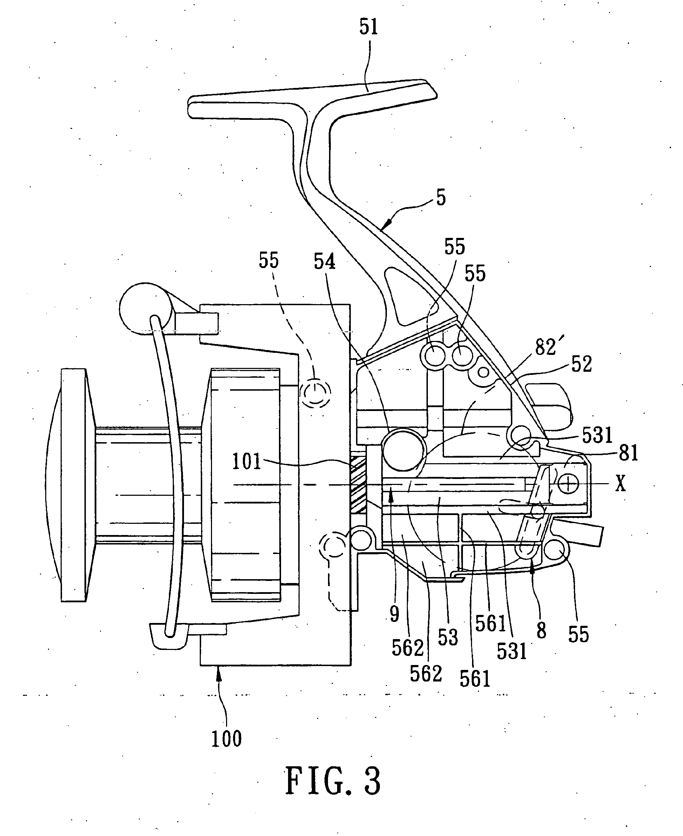

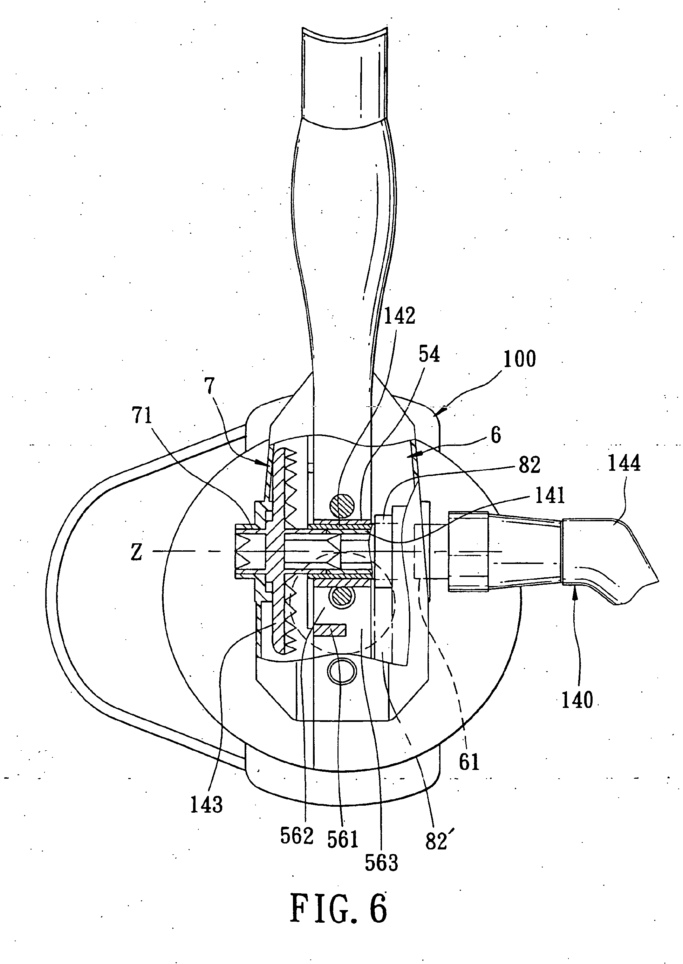

Referring to Figs. 3 and 6, the preferred embodiment of a fishing spinning reel according to this invention is shown to include a flat reel body 5, a pair of first and second side covers 6, 7, a driving unit 8, a spool shaft 9, a rotor 100, and a rotary lever unit 140.

The reel body 5 is made of metal, and has a fishing rod attaching portion 51, a peripheral frame portion 52 formed integrally with the fishing rod attaching portion 51, two parallel guide rods 531 extending integrally from the peripheral frame portion 53 so as to define a guide slot 53 therebetween extending along a first axis (X), a bearing hole 54 having a second axis (Z) perpendicular to the first axis (X), a plurality of positioning holes 55 disposed adjacent to the peripheral frame portion 52, and a plurality of intersecting reinforcing rods 561 defining a plurality of mounting holes 562 that are formed through the reel body 5. Each of the mounting holes 562 has two open ends at two opposite sides of the reel body 5.

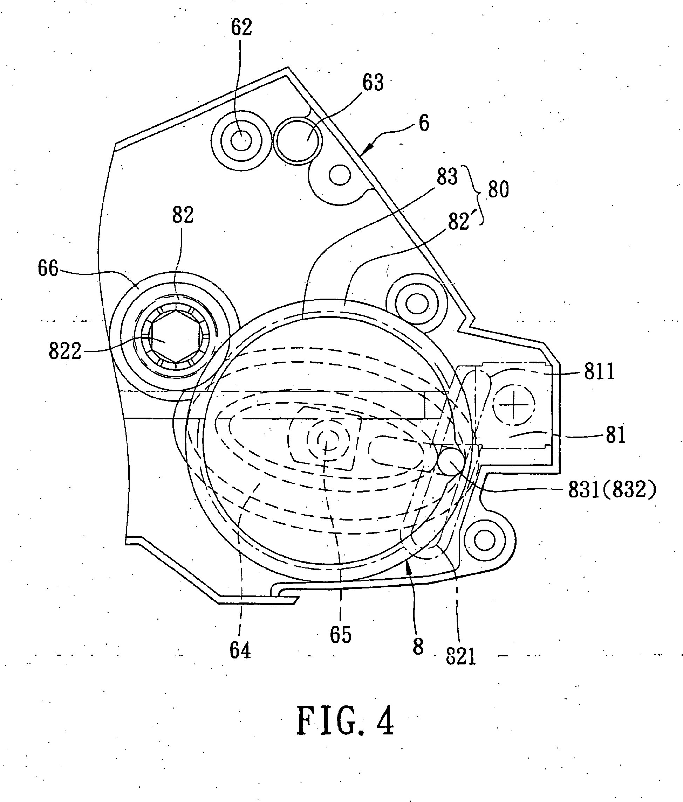

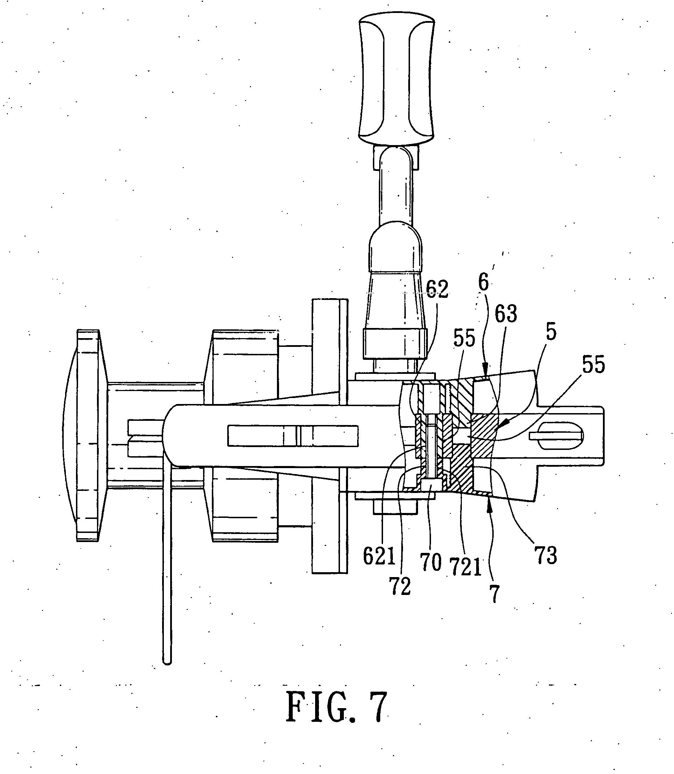

Referring to Figs. 4, 6, and 7, the first and second side covers 6, 7 are made of a lightweight and high-strength plastic material, and are disposed respectively on the opposite sides of the reel body 5 so as to cover the mounting holes 562 in the reel body 5. The first side cover 6 has a bearing hole 61 (see Fig. 6) aligned with the bearing hole 54 in the reel body 5, and a plurality of first positioning rods 62 extending perpendicular to the first axis (X). Each of the first positioning rods 62 has an end surface that is formed with a threaded hole 621. The second side cover 7 has a bearing hole 71 aligned with the bearing hole 54 in the reel body 5, and a plurality of second positioning rods 72 aligned respectively with the first positioning rods 62 of the first side cover 6. Each of the second positioning rods 72 has an axial hole 721 formed therethrough, and an end surface that abuts against the end surface of the corresponding first positioning rod 62 of the first side cover 6. A plurality of headed bolts 70 extend respectively through the axial holes 721 in the second positioning rods 72 of the second side cover 7, and engage respectively the threaded holes 621 in the first positioning rods 62. Therefore; the first and second side covers 6, 7 are interconnected fixedly to clamp the reel body 5 therebetween so as to define an accommodating space 563 (see Fig. 6) among the reel body 5 and the first and second side covers 6, 7. Each of the first and second side covers 6, 7 further has a plurality of insert rods 63, 73, each of which is press fitted within the corresponding positioning hole 55. The first side cover 6 further has an inner surface that is formed with an annular groove 64 and a pivot hole 65. The annular groove 64 is disposed around the pivot hole 65, as shown in Fig. 4.

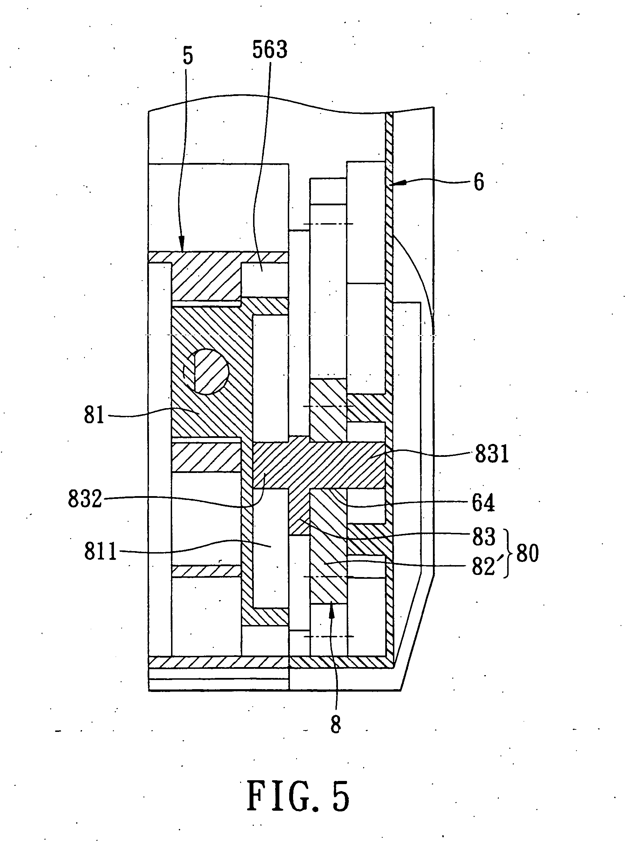

Referring to Figs. 4, 5, and 6, the driving unit 8 is disposed within the accommodating space 563 in the reel body 5, and includes a gear unit 80 disposed on the inner surface of the first side cover 6, and a sliding member 81 received slidably within the guide slot 53 in the reel body 5. The gear unit 80 includes a driving gear 82 disposed rotatably within an annular flange 66 (see Fig. 4) on the inner surface of the first side cover 6, a driven gear 82' having a fixed rotating shaft disposed rotatably within the pivot hole 65 in the first side cover 6, and a rotary disk 83. The driven gear 82' meshes with the driving gear 82. The rotary disk 83 is formed with a pair of first and second projections 831, 832, which are received respectively and slidably within slide slots 821, 811 in the driven gear 82' and the sliding member 81 such that rotation of the driven gear 82' can result in reciprocal movement of the sliding member 81 within the guide slot 53 in the reel body 5 along the first axis (X).

Referring to Fig. 3, the spool shaft 9 is disposed movably within the reel body 5, and is connected fixedly to the sliding member 81 so as to allow for synchronous reciprocal movement of the sliding member 81 and the spool shaft 9 within the reel body 5 along the first axis (X).

The rotor 100 is disposed pivotally on the reel body 5, and is rotatable about the spool shaft 9.

Referring to Figs. 3 and 6, the rotary lever unit 140 includes a shaft tube 141, a gear-engaging sleeve 142, a gear 143, and a rotary lever 144. The shaft tube 141 extends through the bearing holes 54, 61, 71 in the reel body 5 and the first and second side covers 6, 7. The gear-engaging sleeve 142 is sleeved fixedly on the shaft tube 141, and engages fittingly a hexagonal hole 822 (see Fig. 4) in the driving gear 82 so as to allow for synchronous rotation of the driving gear 82 and the shaft tube 141. Thus, rotation of the rotary lever unit 140 can be transferred to the driven gear 82' so as to move the sliding member 81 and the spool shaft 9 within the reel body 5. The gear 143 is formed integrally with the shaft tube 141, and meshes with a gear 101 (see Fig. 3) of the rotor 100 so as to transfer rotation of the rotary lever unit 140 to the rotor 100.

Because the first and second side covers 6, 7 are made of the plastic material, and because the mounting holes 562 are formed through the reel body 5, the total weight of the fishing spinning reel of this invention can be reduced significantly.

## Claims

1. A fishing spinning reel including a reel body (5), a driving unit (8) disposed within the reel body (5), a spool shaft (9) disposed movably within the reel body (5), a rotor (100) disposed pivotally on the reel body (5) and rotatable about the spool shaft (9), and a rotary lever unit (140) disposed pivotally on the reel body (5) and connected operatively to the driving unit (8), the rotary lever unit (140) being operable to cause reciprocal movement of the spool shaft (9) within the reel body (5) and rotation of the rotor (100) on the reel body (5), **characterized by**:
the reel body (5) being flat and being made of metal, the reel body (5) having two opposite sides, a fishing rod attaching portion (51), and a plurality of mounting holes (562) that are formed through the reel body (5), each of the mounting holes (562) having two open ends at the opposite sides of the reel body (5);
two side covers (6, 7) made of a plastic material and disposed respectively on the opposite sides of the reel body (5) so as to cover the mounting holes (562) in the reel body (5), the side covers (6, 7) being interconnected to clamp the reel body (5) therebetween SQ as to define an accommodating space (563) among the reel body (5) and the side covers (6, 7);
the driving unit (8) being disposed within the accommodating space (563) and including a sliding member (81) disposed movably within the reel body (5); and
the spool shaft (9) being connected to the sliding member (81) so as to allow for synchronous reciprocal movement of the sliding member (81) and the spool shaft (9) within the reel body (5) along an axis (X).

2. The fishing spinning reel as claimed in Claim 1, **characterized in that** the reel body (5) has a peripheral frame portion (52) formed integrally with the fishing rod attaching portion (51), and two parallel guide rods (531) extending integrally from the peripheral frame portion (52) so as to define a guide slot (53) therebetween, the sliding member (81) being received slidably within the guide slot (53).

3. The fishing spinning reel as claimed in Claim 2, further **characterized in that** one of the side covers (6, 7) is formed with a first positioning rod (62) that extends along a direction perpendicular to the axis (X) and that has an end surface which is formed with a threaded hole (621), the other of the side covers (6, 7) being formed with a second positioning rod (72) that is aligned with the first positioning rod (62) and that has an axial hole (721) formed therethrough, and an end surface that abuts against the end surface of the first positioning rod (62), the fishing spinning reel further including a headed bolt (70) that extends through the axial hole (721) in the second positioning rod (72) and that engages the threaded hole (621) in the first positioning rod (62) so as to interconnect the side covers (6, 7) fixedly.

4. The fishing spinning reel as claimed in Claim 1, **characterized in that** one of the side covers (6, 7) has an inner surface that is formed with an annular groove (64), the driving unit (8) further including a gear unit (80), the gear unit (80) including a driven gear (82') that is rotated by the rotary lever unit (140), and a rotary disk (83) that is formed with first and second projections (831, 832) which are connected respectively to the driven gear (82') and the sliding member (81) of the driving unit (8) such that rotation of the driven gear (82') can result in reciprocal movement of the sliding member (81) within the reel body (5).

5. The fishing spinning reel as claimed in Claim 4, further **characterized in that** the driven gear (82') is formed with a slide slot (821), the first projection (831) of the rotary disk (83) being received slidably within the slide slot (821) in the driven gear (82').

6. The fishing spinning reel as claimed in Claim 4, further **characterized in that** the sliding member (81) is formed with a slide slot (811), the second projection (831) of the rotary disk (83) being received slidably within the slide slot (811) in the sliding member (81).

## Patentansprüche

1. Angelspinnrolle, umfassend einen Rollenkörper (5), eine Antriebseinheit (8), die in dem Rollenkörper (5) angeordnet ist, einen Spulenschaft (9), der beweglich in dem Rollenkörper (5) angeordnet ist, einen Rotor (100), der schwenkbar an dem Rollenkörper (5) angeordnet ist und um den Spulenschaft (9) herum drehbar ist, sowie eine Drehhebeleinheit (140), die schwenkbar an dem Rollenkörper (5) angeordnet ist und funktional mit der Antriebseinheit (8) verbunden ist, wobei die Drehhebeleinheit (140) dazu dient, eine Hin- und Herbewegung des Spulenschafts (9) in dem Rollenkörper (5) sowie eine Drehung des Rotors (100) an dem Rollenkörper (5) zu bewirken, **dadurch gekennzeichnet, dass**
der Rollenkörper (5) flach ist und aus Metall hergestellt ist, wobei der Rollenkörper (52) zwei einander gegenüberliegende Seiten, einen Angelruten-Befestigungsabschnitt (51) sowie eine Mehrzahl von Montagelöchern (562) aufweist, die durch den Rollenkörper (5) hindurchreichend ausgebildet sind, wobei jedes der Montagelöcher (562) zwei offene Enden an den gegenüberliegenden Seiten des Rollenkörpers (5) aufweist; dass
zwei Seitenabdeckungen (6, 7) aus einem Kunststoffmaterial hergestellt sind und jeweils an den gegenüberliegenden Seiten des Rollenkörpers (5) in solcher Weise angeordnet sind, dass sie die Montagelöcher (562) in dem Rollenkörper (5) abdecken, wobei die Seitenabdeckungen (6, 7) miteinander verbunden sind, um den Rollenkörper (5) zwischen diesen einzuspannen, sodass ein Aufnahmeraum (563) zwischen dem Rollenkörper (5) und den Seitenabdeckungen (6, 7) definiert ist; dass
die Antriebseinheit (8) innerhalb des Aufnahmeraums (563) angeordnet ist und ein gleitendes Element (81) umfasst, das beweglich innerhalb des Rollenkörpers (5) angeordnet ist; und dass
der Spulenschaft (9) mit dem gleitenden Element derart verbunden ist, dass eine synchrone Hin- und Herbewegung des gleitenden Elements (81) und des Spulenschafts in dem Rollenkörper (5) entlang einer Achse (X) möglich ist.

2. Angelspinnrolle nach Anspruch 1, **dadurch gekennzeichnet, dass** der Rollenkörper (5) einen Umfangsrahmenabschnitt (52) aufweist, der integral mit dem Angelruten-Befestigungsabschnitt (51) ausgebildet ist, und dass sich zwei parallele Führungsstreben (531) integral von dem Umfangsrahmenabschnitt (52) aus in solcher Weise erstrecken, dass zwischen diesen ein Führungsschlitz (52) definiert ist, wobei das gleitende Element (81) verschiebbar in dem Führungsschlitz (53) aufgenommen ist.

3. Angelspinnrolle nach Anspruch 2, ferner **dadurch gekennzeichnet, dass** eine der Seitenabdeckungen (6, 7) mit einer ersten Positionierungsstrebe (62) ausgebildet ist, die sich entlang einer Richtung senkrecht zu der Achse (X) erstreckt und die eine Endfläche aufweist, an welcher ein Gewindeloch (621) ausgebildet ist, wobei die andere der Seitenabdeckungen (6, 7) mit einer zweiten Positionierungsstrebe (72) ausgebildet ist, die mit der ersten Positionierungsstrebe (62) ausgerichtet ist und durch welche hindurchreichend ein axiales Loch (721) ausgebildet ist und welche eine Endfläche aufweist, die gegen die Endfläche der ersten Positionierungsstrebe (62) stößt, wobei die Angelspinnrolle ferner eine Kopfschraube (70) umfasst, die sich durch das axiale Loch (721) hindurch in die zweite Positionierungsstrebe (72) hinein erstreckt und in dem in der ersten Positionierungsstrebe (62) vorgesehenen Gewindeloch (621) in Eingriff steht, sodass sie die Seitenabdeckungen (6, 7) fest miteinander verbindet.

4. Angelspinnrolle nach Anspruch 1, **dadurch gekennzeichnet, dass** eine der Seitenabdeckungen (6, 7) eine Innenseite aufweist, in der eine ringförmige Nut (64) ausgebildet ist, wobei die Antriebseinheit (8) ferner eine Zahnradeinheit (80) umfasst, wobei die Zahnradeinheit (80) ein angetriebenes Zahnrad (82') umfasst, das durch die Drehhebeleinheit (140) gedreht wird, sowie eine Drehscheibe (83), an welcher ein erster und ein zweiter Vorsprung (831, 832) ausgebildet sind, welche mit dem angetriebenen Zahnrad (82') beziehungsweise dem gleitenden Element (81) der Antriebseinheit (8) in solcher Weise verbunden sind, dass eine Drehung des angetriebenen Zahnrads (82') zu einer Hin- und Herbewegung des gleitenden Elements (81) in dem Rollenkörper (5) führen kann.

5. Angelspinnrolle nach Anspruch 4, ferner **dadurch gekennzeichnet, dass** das angetriebene Zahnrad (82') mit einem Gleitschlitz (821) ausgebildet ist, wobei der erste Vorsprung (831) der Drehscheibe (83) verschiebbar in dem im angetriebenen Zahnrad (82') vorgesehenen Gleitschlitz (821) aufgenommen ist.

6. Angelspinnrolle nach Anspruch 4, ferner **dadurch gekennzeichnet, dass** das gleitende Element (81) mit einem Gleitschlitz (811) ausgebildet ist, wobei der zweite Vorsprung (832) der Drehscheibe (83) verschiebbar in dem im gleitenden Element (81) vorgesehenen Gleitschlitz (811) aufgenommen ist.

## Revendications

1. Moulinet de pêche incluant un corps (5) de moulinet, un module (8) d'entraînement disposé à l'intérieur du corps (5) de moulinet, un axe (9) de bobine disposé de manière mobile à l'intérieur du corps (5) de moulinet, un rotor (100) disposé de manière pivotante sur le corps (5) de moulinet et mobile en rotation autour de l'axe (9) de bobine, et un module (140) de levier tournant disposé de manière pivotante sur le corps (5) de moulinet et en prise fonctionnelle avec le module (8) d'entraînement, le module (140) de levier tournant pouvant opérer pour provoquer un mouvement de va-et-vient de l'axe (9) de bobine à l'intérieur du corps (5) de moulinet et une rotation du rotor (100) sur le corps (5) de moulinet, **caractérisé par** :
le corps (5) de moulinet étant plat et étant réalisé en métal, le corps (5) de moulinet comportant deux côtés opposés, une partie (51) d'assujettissement à une canne à pêche, et une pluralité de trous (562) de montage qui sont formés à travers le corps (5) de moulinet, chacun des trous (562) de montage comportant deux extrémités ouvertes au niveau des côtés opposés du corps (5) de moulinet ;
deux éléments de recouvrement latéraux (6, 7) réalisés en matière plastique et disposés respectivement sur les côtés opposés du corps (5) de moulinet de façon à couvrir les trous (562) de montage du corps (5) de moulinet, les éléments de recouvrement latéraux (6, 7) étant liés mutuellement pour serrer, entre eux, le corps (5) de moulinet de façon à définir un espace (563) de réception entre le corps (5) de moulinet et les éléments de recouvrement latéraux (6, 7) ;
le module (8) d'entraînement étant disposé à l'intérieur de l'espace (563) de réception et incluant un élément coulissant (81) disposé de manière mobile à l'intérieur du corps (5) de moulinet ; et
l'axe (9) de bobine étant relié à l'élément coulissant (81) de façon à permettre un mouvement de va-et-vient synchrone de l'élément coulissant (81) et de l'axe (9) de bobine à l'intérieur du corps (5) de moulinet le long d'un axe (X).

2. Moulinet de pêche selon la revendication 1, **caractérisé en ce que** le corps (5) de moulinet comporte une partie périphérique (52) de bâti formée d'un seul tenant avec la partie (51) d'assujettissement à une canne à pêche, et deux tiges parallèles (531) de guidage s'étendant d'un seul tenant à partir de la partie périphérique (52) de bâti de façon à définir, entre elles, une fente (53) de guidage, l'élément coulissant (81) étant reçu de manière coulissante à l'intérieur de la fente (53) de guidage.

3. Moulinet de pêche selon la revendication 2, **caractérisé en outre en ce que** l'un des éléments de recouvrement latéraux (6, 7) est formé avec une première tige (62) de positionnement qui s'étend dans une direction perpendiculaire à l'axe (X) et qui comporte une surface d'extrémité qui est formée avec un trou taraudé (621), l'autre des éléments de recouvrement latéraux (6, 7) étant formé avec une seconde tige (72) de positionnement qui est alignée avec la première tige (62) de positionnement et qui comporte un trou axial (721) formé à travers celle-ci, et une surface d'extrémité qui vient en butée contre la surface d'extrémité de la première tige (62) de positionnement, le moulinet de pêche incluant en outre une vis à tête (70) qui s'étend à travers le trou axial (721) réalisé dans la seconde tige (72) de positionnement et qui engage avec le trou taraudé (621) réalisé dans la première tige (62) de positionnement de façon à lier mutuellement de manière fixe les éléments de recouvrement latéraux (6, 7).

4. Moulinet de pêche selon la revendication 1, **caractérisé en ce que** l'un des éléments de recouvrement latéraux (6, 7) comporte une surface intérieure qui est formée avec une rainure annulaire (64), le module (8) d'entraînement incluant en outre un module (80) d'engrenage, le module (80) d'engrenage incluant un engrenage mené (82') qui est entraîné en rotation par le module (140) de levier tournant, et un disque rotatif (83) qui est formé avec des première et seconde saillies (831, 832) qui sont respectivement en prise avec l'engrenage mené (82') et avec l'élément coulissant (81) du module (8) d'entraînement, de sorte qu'une rotation de l'engrenage mené (82') peut fournir un mouvement de va-et-vient de l'élément coulissant (81) à l'intérieur du corps (5) de moulinet.

5. Moulinet de pêche selon la revendication 4, **caractérisé en outre en ce que** l'engrenage mené (82') est formé avec une fente (821) de coulisse, la première saillie (831) du disque rotatif (83) étant reçue de manière coulissante à l'intérieur de la fente (821) de coulisse réalisée dans l'engrenage mené (82').

6. Moulinet de pêche selon la revendication 4, **caractérisé en outre en ce que** l'élément coulissant (81) est formé avec une fente (811) de coulisse, la seconde saillie (831) du disque rotatif (83) étant reçue de manière coulissante à l'intérieur de la fente (811) de coulisse réalisée dans l'élément coulissant (81).
